# EUROPÄISCHE PATENTSCHRIFT

(11) **EP 4 291 420 B1**
(45) Veröffentlichungstag und Bekanntmachung des Hinweises auf die Patenterteilung: **27.08.2025**
(21) Anmeldenummer: 21827185.6
(22) Anmeldetag: 29.11.2021
(51) Int. Cl.: B60C 11/03, B60C 11/13, B60C 11/12

(54) **FAHRZEUGLUFTREIFEN**
PNEUMATIC TYRE FOR A VEHICLE
PNEU POUR UN VÉHICULE

(30) Priorität: 12.02.2021 DE 102021201350
(43) Veröffentlichungstag der Anmeldung: 20.12.2023
(73) Patentinhaber: Continental Reifen Deutschland GmbH, 30175 Hannover (DE)
(72) Erfinder: BRANDAU, Christian, 30165 Hannover (DE); BROCKMANN, Jürgen, 30165 Hannover (DE); SENG, Matthias, 30165 Hannover (DE); SUBRAMANIAN, Manickaraj, 30165 Hannover (DE)
(74) Vertreter: Continental Corporation
(86) Internationale Anmeldenummer: PCT/DE2021/200213
(87) Internationale Veröffentlichungsnummer: WO 2022/171225

(56) Entgegenhaltungen:
- DE-A1- 102018 221 498
- DE-B4- 19 826 927
- US-B1- 6 382 283

## Beschreibung

Die Erfindung betrifft einen Fahrzeugluftreifen
- mit einem laufrichtungsgebunden gestalteten Laufstreifen mit zumindest zwei Profilblockreihen, welche durch eine Umfangsrille getrennt und durch in die Umfangsrille einmündende in Draufsicht jeweils parallel zueinander verlaufende Querrillen in Profilblöcke gegliedert sind,
- wobei die Umfangsrille parallel zueinander verlaufende, jeweils einen Profilblock aus der einen Profilblockreihe von einem Profilblock aus der anderen Profilblockreihe trennende Rillenabschnitte mit jeweils einem Rillengrund sowie mit jeweils einem beim Abrollen des Reifens bei Vorwärtsfahrt zuerst in Untergrund eintretenden, einlaufenden Ende und einem auslaufenden Ende aufweist,
- wobei die Profilblöcke an der Laufstreifenperipherie entlang der Rillenabschnitte jeweils eine in Draufsicht gerade verlaufende Blockkante und eine von dieser ausgehende bis zum Rillengrund des jeweiligen Rillenabschnittes verlaufende Blockflanke aufweisen.

Ein derartiger Fahrzeugluftreifen ist beispielsweise aus der DE 102015221 118 A1 bekannt. Beim beschriebenen Ausführungsbeispiel weist der Laufstreifen V-förmig über die Laufstreifenbreite verlaufende Querrillen auf, welche zu zwei schulterseitigen und zwei mittleren Profilblockreihen gehörende Profilblöcke voneinander trennen. Die schulterseitigen Profilblockreihen sind von den mittleren Profilblockreihen durch Umfangsrillen getrennt, welche in Draufsicht zur Umfangsrichtung geneigt sowie parallel zueinander verlaufende, jeweils einen Profilblock aus einer schulterseitigen Profilblockreihe von einem Profilblock aus der mittleren Profilblockreihe trennende Rillenabschnitte aufweisen. Die Profilblöcke beider Profilblockreihen sind mit Einschnitten versehen, wobei die in den Profilblöcken der schulterseitigen Profilblockreihe ausgebildeten Einschnitte in Draufsicht parallel zu den Querrillen verlaufen, in die Rillenabschnitte der Umfangsrille einmünden und dem jeweiligen Profilblock Blocksegmente verleihen. Die Profilblöcke sind ferner jeweils mit einem Spike versehen, welcher vom im Profilblock ausgebildeten und als Eisreservoire dienenden Vertiefungen umgeben ist.

Aus der DE 10 2018 221 498 A1 ist ein Fahrzeugluftreifen mit einem laufrichtungsgebunden gestalteten Laufstreifen mit zwei schulterseitigen Profilblockreihen und zwei halbmittigen Profilblockreihen bekannt, wobei die jeweils benachbarten Profilblockreihen je durch eine Umfangsrille getrennt sind. Jede schulterseitige und jede halbmittige Profilblockreihe ist durch Querrillen in Profilblöcke gegliedert. Die Umfangsrillen weisen jeweils parallel zueinander verlaufende, je einen Profilblock aus der halbmittigen Profilblockreihe von einem Profilblock aus der schulterseitigen Profilblockreihe trennende Rillenabschnitte auf. Die schulterseitigen Profilblöcke sind, in Draufsicht betrachtet, von parallel zu den Querrillen verlaufenden Einschnitten und jeweils einem in die angrenzenden Querrillen einmündenden, sägezahnartig verlaufenden Einschnitt durchquert. Der sägezahnartig verlaufende Einschnitt setzt sich, in Draufsicht betrachtet, aus in axialer Richtung verlaufenden ersten Einschnittabschnitten und zwischen diesen verlaufenden zweiten Einschnittabschnitten zusammen, wobei der zweite Einschnittabschnitt, welcher über die auslaufende Blockkante aus dem schulterseitigen Profilblock austritt, schmäler ausgeführt ist als die weiteren Einschnittabschnitte. Dadurch soll - ohne Verringerung der Steifigkeit - der Kontakt der schulterseitigen Profilblöcke zum Untergrund verbessert sein.

Aus der DE 198 26 927 B4 ist ein Fahrzeugluftreifen mit einem bezüglich der Reifenäquatorialebene asymmetrischen, drehrichtungsfreien Laufstreifen bekannt, welcher in jeder Laufstreifenhälfte paarweise zueinander benachbarte halbmittige Profilblöcke aufweist, die durch zur Umfangsrichtung gleichsinnig geneigt verlaufende, kurze Rillen voneinander getrennt sind und die an diesen Rillen in Draufsicht zick-zack-förmig verlaufende Blockkanten aufweisen.

Die US 6 382 283 B1 offenbart einen Fahrzeugluftreifen mit einem bezüglich der Reifenäquatorialebene asymmetrischen, drehrichtungsfreien Laufstreifen mit zwei schulterseitigen Profilblockreihen und zwei mittleren Profilblockreihen, wobei die Profilblockreihen durch Umfangsrillen getrennt sind. Die Profilblockreihen weisen Profilblöcke auf, welche durch zur Umfangsrichtung gleichsinnig geneigte Rillenabschnitte der entsprechenden Umfangsrille voneinander getrennt sind und welche an den Rillenabschnitten in Draufsicht zick-zack-förmig verlaufende Blockkanten aufweisen.

Es ist bekannt, dass die Bremseigenschaften von Fahrzeugluftreifen auf Schnee durch mehrere Mechanismen bzw. Effekte beeinflusst werden. Zu diesen Effekten gehören die Gummi-Schnee-Reibung, die Schnee-Schnee-Reibung (in Rillen bzw. Einschnitten angesammelter Schnee verbessert den Grip) und als Griffkanten wirkende Rillen- und Einschnittkanten. Mit zunehmenden Laufstreifenabrieb besteht die Gefahr, dass die Schneegriffeigenschaften, insbesondere die Bremseigenschaften auf Schnee, nachlassen. Entsprechende Gegenmaßnahmen, wie beispielsweise stark zick-zack- oder wellenförmig verlaufende Umfangsrillen, reduzieren das Wasserdrainagevermögen des Laufstreifens.

Der Erfindung liegt daher die Aufgabe zugrunde, bei einem Fahrzeugluftreifen der eingangs genannten Art, die Bremseigenschaften auf Schnee über den Laufstreifenabrieb auf hohem Niveau zu halten, wobei gleichzeitig ein gutes Wasserdrainagevermögen erhalten bleiben soll.

Gelöst wird die gestellte Aufgabe erfindungsgemäß dadurch gelöst,
- dass die Blockflanken der Profilblöcke, welche mit den in die Rillenabschnitte einmündenden Einschnitten versehen sind, entlang des Rillenabschnittes eine gleichmäßig gestufte Struktur bilden, welche sich aus Flankenflächen und Übergangsflächen zusammensetzt,
- wobei die Flankenflächen von den Blockkantenabschnitten ausgehen und bis zum Rillengrund verlaufen und
- die Übergangsflächen zwischen den Flankenflächen sowie vom Rillengrund zum Einschnittgrund verlaufen und schmäler als die Flankenflächen ausgeführt sind und
- wobei bei Sicht durch einen Rillenabschnitt in Richtung vom einlaufenden Ende zum auslaufenden Ende, die Flankenflächen die Übergangsflächen verdecken.

Die vom Rillengrund zum Einschnittgrund verlaufenden Übergangsflächen begünstigen beim Fahren auf Schnee das Öffnungsverhalten der Einschnitte im Bereich ihrer in die Rillenabschnitte einmündenden, randseitigen Einschnittabschnitte, sodass in diesem Bereich die Wirkung der Einschnittkanten als Griffkanten verbessert ist. Mit fortlaufendem Abrieb der Profilblöcke verschwinden die in die Rillenabschnitte einmündenden randseitigen Einschnittabschnitte, sodass in diesem Bereich an den radial äußeren Enden der Übergangsflächen zusätzliche Kanten an der durch den Abrieb "versetzten" Laufstreifenperipherie zum Vorschein kommen, durch welche die an den Rillenabschnitten liegenden Blockkanten insgesamt etwas länger werden. Gleichzeitig nimmt mit zunehmenden Laufstreifenabrieb die Steifigkeit der Profilblöcke zu. Die mit der zunehmenden Steifigkeit der Profiblöcke abnehmende Biegefähigkeit der Profilblöcke und der damit einhergehende Einfluss auf die Wirkung der Blockkanten als Griffkanten wird durch die erwähnten, sich bildenden zusätzlichen Kanten an den Übergangsflächen kompensiert oder zumindest Großteils ausgeglichen, sodass ein guter Schneegriff, insbesondere unter Bremsbelastung, erhalten bleibt. Da bei Sicht durch einen Rillenabschnitt in Richtung vom einlaufenden Ende zum auslaufenden Ende, die Flankenflächen die Übergangsflächen verschatten, ist der Einfluss der gestuften Struktur auf das Wasserdrainagevermögen in den Rillenabschnitten äußerst gering bzw. vernachlässigbar, insbesondere ist ein weitgehend verwirbelungsfreier bzw. verwirbelungsarmer Wasserfluss durch die Umfangsrille gewährleistet, sodass ein hohes Wasserdrainagevermögen erhalten bleibt.

Gemäß einer bevorzugten Ausführung sind die Rillenabschnitte derart zur Umfangsrichtung geneigt, dass sich das einlaufende Ende jedes Rillenabschnittes näher zur Reifenäquatorialebene befindet als das auslaufende Ende. Dies trägt beim Fahren auf nasser Fahrbahn dazu bei, Wasser wirkungsvoll aus dem Bereich der Bodenaufstandsfläche abzuleiten und ist somit für das Wasserdrainagevermögen von Vorteil.

Bevorzugt weisen die Übergangsflächen der Blockflanken, welche die gleichmäßig gestufte Struktur bilden, an ihrer breitesten Stelle eine Breite von 0,3 mm bis 1,0 mm, insbesondere von 0,5 mm bis 0,8 mm, auf. Die Übergangsflächen sind daher entsprechend schmal, was für das Wasserdrainageverhalten in den Rillenabschnitten von zusätzlichem Vorteil ist.

Ferner ist es von Vorteil, wenn die Übergangsflächen der Blockflanken, welche die gleichmäßig gestufte Struktur bilden, eine an den Einschnittgrund anschließende radial äußere Begrenzungskante mit einer Länge von insbesondere höchstens 0,3 mm aufweisen. Ein solche Begrenzungskante begünstigt bei neuem bzw. wenig abgefahrenem Reifen das Öffnungsverhalten der in die Rillenabschnitte einmündenden, randseitigen Einschnittabschnitte. Dies ist darauf zurückzuführen, dass sich der beim Fahren auf Schnee in den randseitigen Einschnittabschnitten ansammelnde Schnee an dieser Kante eine Kraft erzeugt, welche das Öffnen, also das Aufklappen, der randseitigen Einschnittabschnitte bei Bodenkontakt unterstützt. Die Wirkung der Einschnittkanten als Griffkanten ist somit verbessert.

Gemäß einer bevorzugten Ausführung werden die Übergangsflächen der Blockflanken, welche die gleichmäßig gestufte Struktur bilden, betrachtet ausgehend vom Rillengrund des jeweiligen Rillenabschnitts, in Richtung zum jeweiligen Einschnittgrund zumindest über einen radial äußerer Flächenabschnitt insbesondere kontinuierlich schmäler. Mit zunehmendem Laufstreifenabrieb wird somit die bereits erwähnte, sich am radial äußeren Ende der Übergangsflächen bildende zusätzliche Kante kontinuierlich länger und gleicht derart die mit der abnehmenden Biegefähigkeit der Profilblöcke einhergehende geringere Griffwirkung der Einschnittkanten aus bzw. trägt zur Aufrechterhaltung guter Bremseigenschaften auf Schnee bei.

Bei der letztgenannten Ausführung ist es von Vorteil, wenn sich die Übergangsflächen der Blockflanken, welche die gleichmäßig gestufte Struktur bilden, in radialer Richtung jeweils aus dem radial äußeren Flächenabschnitt und einem radial inneren, in radialer Richtung kreisbogenförmig verlaufenden Flächenabschnitt zusammensetzen, wobei der radial äußere Flächenabschnitt und der radial innere radial innere Flächenabschnitt in radialer Richtung in einer Tiefe von 50% bis 95%, insbesondere von 70% bis 80%, der Profiltiefe aneinander anschließen.

Gemäß einer weiteren bevorzugten Ausführung sind die Übergangsflächen der Blockflanken, welche die gleichmäßig gestufte Struktur bilden, in Draufsicht betrachtet, zur Erstreckungsrichtung der Rillenabschnitte quer- oder schräggestellt.

Eine weitere bevorzugte Ausführung ist dadurch gekennzeichnet, dass sich die Flankenflächen der Blockflanken, welche die gleichmäßig gestufte Struktur bilden, in radialer Richtung aus einem radial äußeren Flächenabschnitt und einem radial inneren Flächenabschnitt zusammensetzen, wobei der radial äußere Flächenabschnitt, im Querschnitt senkrecht zum Blockkantenabschnitt betrachtet, gerade sowie zur radialen Richtung unter einem Winkel von 0° bis 7°, insbesondere von 1° bis 5°, verläuft, wobei der Winkel über die Erstreckung des Blockkantenabschnittes in Richtung zum auslaufenden Ende des Rillenabschnittes kontinuierlich um insbesondere bis zu 2° zunimmt. Diese Maßnahme ist im Hinblick auf das Wasserdrainagevermögen günstig.

Eine weitere im in Hinblick auf das Wasserdrainagevermögen günstige Ausführung ist dadurch gekennzeichnet, dass ausschließlich die Blockflanken der Profilblöcke der einen Profilblockreihe die gleichmäßig gestufte Struktur bilden und die Blockflanken der Profilblöcke der anderen Profilblockreihe unstrukturierte Flächen sind.

Bei dieser Ausführung ist von Vorteil, wenn sich die Profilblockreihe mit den Profilblöcken, deren Blockflanken die gleichmäßig gestufte Struktur bilden, gegenüber der anderen Profilblockreihe weiter laufstreifenaußenseitig befindet.

Bei dieser Ausführung ist von weiterem Vorteil, wenn die Profilblockreihe mit jenen Profilblöcken, deren Blockflanken die gleichmäßig gestufte Struktur bilden, eine schulterseitige Profilblockreihe ist.

Darüber hinaus ist es bei dieser Ausführung von Vorteil, wenn die Blockflanken, welche unstrukturierte Flächen sind, im Querschnitt senkrecht zur Mittelinie des Rillenabschnittes betrachtet, zur radialen Richtung unter einen insbesondere konstanten Winkel von 2° bis 10°, vorzugsweise von 4° bis 8°, verlaufen.

Eine weitere bevorzugte Ausführung, welche insbesondere für den Schneegriff günstig ist, ist dadurch kennzeichnet, dass die Rillenabschnitte der Umfangsrille, in Draufsicht betrachtet und bezogen auf eine Mittelinie zur Umfangsrichtung, unter einem Winkel von 2° bis 7°, insbesondere von höchstens 5°, verlaufen.

Gemäß einer weiteren, ebenfalls im Hinblick auf den Schneegriff günstigen Ausführung weist die Umfangsrille, im Querschnitt betrachtet, keinen oder einen reduzierten "lookthrough" auf, sodass, im in axialer Richtung ausgerichteten Querschnitt betrachtet, keine bzw. eine reduzierte Durchsicht durch die Umfangsrille möglich ist.

Bei neuem bzw. wenig abgefahrenem Reifen ist es für die Bremseigenschaften auf Schnee günstig, wenn die Einschnitte jeweils einen Einschnittrandabschnitt aufweisen, welcher in den Rillenabschnitt einmündet und in radialer Richtung eine Tiefe von 20% bis 40%, insbesondere von 25% bis 35%, der Profiltiefe aufweist.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine vereinfachte Draufsicht auf einen in die Ebene abgewickelten Umfangsabschnitt eines Laufstreifens eines Fahrzeugluftreifens mit einer Ausführungsvariante der Erfindung,
Fig. 2 eine vergrößerte Draufsicht auf zwei zum Laufstreifen gehörende Profilblöcke,
Fig. 3 einen Schnitt entlang der Linie III-III der Fig. 2,
Fig. 4 eine vereinfachte Schrägansicht gemäß der in Fig. 2 durch einen Pfeil S₄ angedeuteten Sichtrichtung und
Fig. 5 eine weiter vergrößerte Schrägansicht gemäß der in Fig. 2 durch einen Pfeil S₅ angedeuteten Sichtrichtung.

Gemäß der Erfindung ausgeführte Fahrzeugluftreifen sind Reifen für Kraftfahrzeuge, insbesondere für mehrspurige Kraftfahrzeuge, sowie vorzugsweise Reifen in Radialbauart für Personenkraftwagen, Vans oder Light-Trucks (Leichte LKWs mit zGM ≤ 7,5 t), wobei die Reifen für den Einsatz unter winterlichen Fahrbedingungen vorgesehen sind.

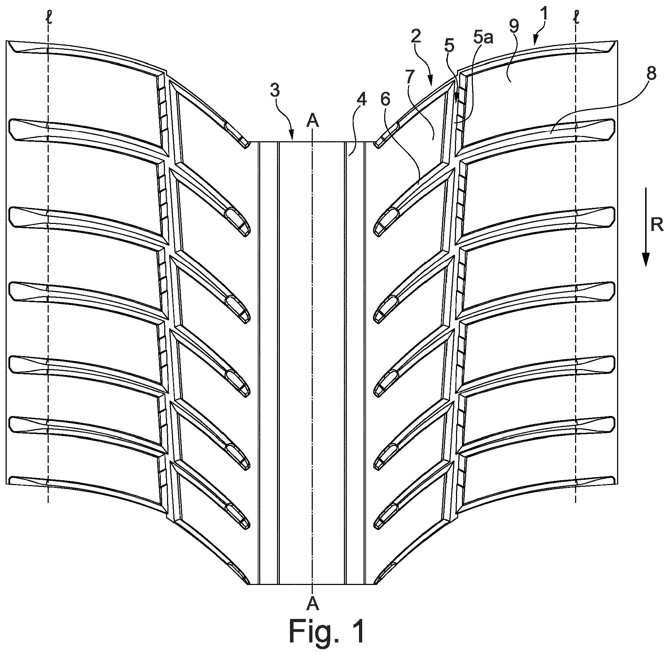

Fig. 1 zeigt eine vereinfachte Draufsicht auf einen Umfangsabschnitt eines Laufstreifens eines Fahrzeugluftreifens. Die Reifenäquatorialebene ist durch eine gestrichelte Linie A-A und die seitlichen Ränder der Bodenaufstandsfläche des Laufstreifens sind durch gestrichelte Linien I angedeutet. Die Bodenaufstandsfläche entspricht dem statisch ermittelten Footprint gemäß E.T.R.T.O.-Standards (Last bei 70% der maximalen Tragfähigkeit bei einem Innendruck von 85% nach E.T.R.T.O.-Norm).

Der Laufstreifen weist zwei schulterseitige Profilblockreihen 1, zwei zu diesen benachbart ausgebildete mittlere Profilblockreihen 2 und eine zentrale Profilrippe 3 auf, ist beim gezeigten Ausführungsbeispiel bezüglich der Reifenäquatorialebene (Linie A-A) symmetrisch ausgeführt und ist ferner mit einer laufrichtungsgebunden ausgeführten Profilierung versehen, wobei der Fahrzeugluftreifen derart am Fahrzeug zu montieren ist, dass er die durch den Pfeil R gekennzeichnete Abrollrichtung bei Vorwärtsfahrt aufweist.

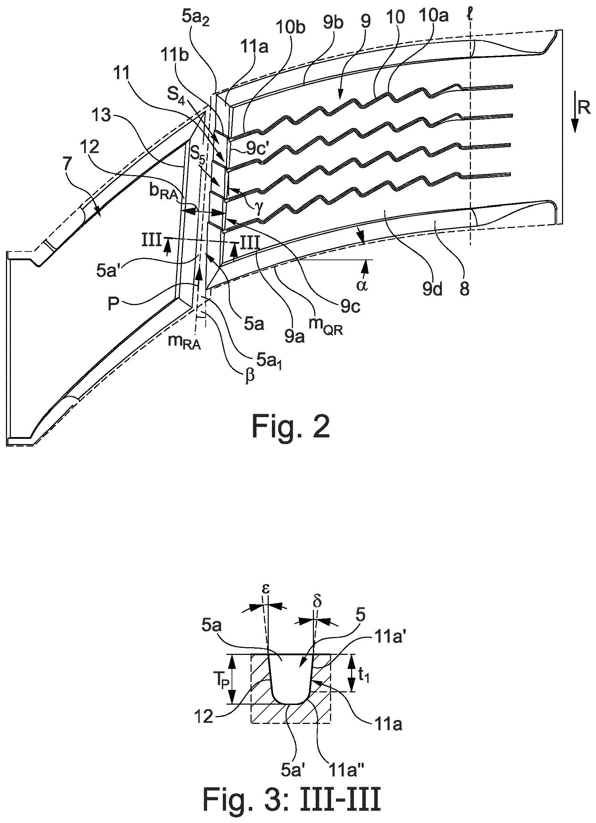

Die mittleren Profilblockreihen 2 sind jeweils durch eine in Draufsicht gerade verlaufende mittlere Umfangsrille 4 von der zentralen Profilrippe 3 und durch eine in Draufsicht sägezahnförmig verlaufende schulterseitige Umfangsrille 5 von der jeweils angrenzenden schulterseitigen Profilblockreihe 1 getrennt. Die Umfangsrillen 4, 5 sind auf die jeweils vorgesehene Profiltiefe T_{P} (Fig. 3, gezeigt für eine schulterseitige Umfangsrille 5) ausgeführt, welche für den bevorzugten Reifentyp üblicherweise 6,5 mm bis 10,0 mm beträgt.

Die mittleren Profilblockreihen 2 sind jeweils mit in Draufsicht parallel zueinander sowie bogenförmig verlaufenden, mittleren Querrillen 6 versehen, welche laufstreifeninnenseitig innerhalb der Profilblockreihen 2 enden, laufstreifenaußenseitig in die jeweilige schulterseitige Umfangsrille 5 einmünden und den mittleren Profilblockreihen 2 in Draufsicht im Wesentlichen parallelogrammförmige mittlere Profilblöcke 7 verleihen. Die Orientierung der Querrillen 6 ist derart, dass diese mit ihren laufstreifeninnenseitigen Enden zuerst in den Untergrund eintreten.

Die schulterseitigen Profilblockreihen 1 sind jeweils mit in Draufsicht parallel zueinander verlaufenden, schulterseitigen Querrillen 8 versehen, welche in die jeweilige schulterseitige Umfangsrille 5 einmünden, schulterseitige Profilblöcke 9 voneinander trennen und in Draufsicht leicht bogenförmig sowie - bezogen auf in Draufsicht dem Rillenverlauf folgende Rillenmittellinien m_{QR} (Fig. 2) - zur axialen Richtung unter einem Winkel α (Fig. 2, Teile zweier Querrillen 8 sind zu sehen) von 2° bis 25°, insbesondere von 5° bis 20°, verlaufen, wobei der Winkel α in Richtung zur Laufstreifenschulter kontinuierlich abnimmt.

Die schulterseitigen Querrillen 8 verlaufen zumindest im Wesentlichen in Fortsetzung der mittleren Querrillen 6, wobei sich die Querrillen 6, 8 insgesamt V-förmig über die Laufstreifenbreite erstrecken. Bedingt durch den V-förmigen Verlauf der Querrillen 6, 8 weist jede schulterseitige Umfangsrille 5 eine Vielzahl von Rillenabschnitten 5a auf, welche jeweils einen schulterseitigen Profilblock 9 von einem mittleren Profilblock 7 trennen, daher bis zu den jeweiligen Querrillen 6, 8 reichen und einen auf der Profitiefe T_{P} verlaufenden Rillengrund 5a' aufweisen (Fig. 3).

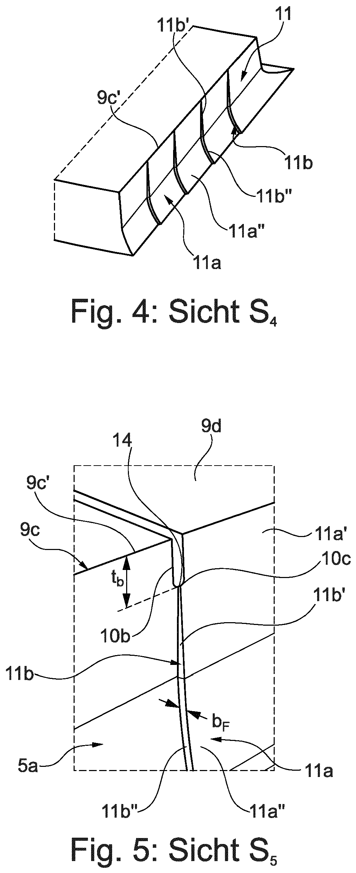

Die weitere Ausgestaltung der mittleren Profilblöcke 7, der schulterseitigen Profilblöcke 9 und der Rillenabschnitte 5a wird nachfolgend anhand zweier benachbarter Profilblöcke 7, 9 und des zughörigen Rillenabschnittes 5a unter Zuhilfenahme der Fig. 2 bis Fig. 5 erläutert. Fig. 2 zeigt eine vergrößerte und detaillierte Darstellung eines schulterseitigen Profilblockes 9 sowie den zu diesem benachbart ausgebildeten, mittleren Profilblock 7. Fig. 3 zeigt den Schnitt entlang der Linie III-III der Fig. 2, Fig. 4 zeigt eine Ansicht gemäß dem Pfeil S₄ der Fig. 2 in vereinfachter Darstellung und Fig. 5 zeigt eine Ansicht gemäß dem Pfeil S₅ der Fig. 2.

Wie Fig. 2 zeigt, verläuft der Rillenabschnitt 5a, in Draufsicht betrachtet und bezogen auf eine Mittelinie m_{RA}, gerade sowie zur Umfangsrichtung unter einem Winkel β von 2° bis 7°, insbesondere von höchstens 5°, und weist an der Laufstreifenperipherie eine senkrecht zur Mittellinie m_{RA} ermittelte Breite b_{RA} von 6,0 mm bis 13,0 mm auf. Die Breite b_{RA} und der Winkel β des Rillenabschnittes 5a sind derart aufeinander abgestimmt, dass die schulterseitigen Umfangsrillen 5 keinen oder einen reduzierten "lookthrough" aufweisen, d.h., dass, im in axialer Richtung ausgerichteten Querschnitt betrachtet, keine bzw. eine reduzierte Durchsicht durch die schulterseitigen Umfangsrillen 5 möglich ist (vergl. Fig. 1). Der Rillenabschnitt 5a weist ein beim Abrollen des Reifens bei Vorwärtsfahrt zuerst in den Untergrund eintretendes einlaufendes Ende 5a₁ und ein auslaufendes Ende 5a₂ auf und ist derart relativ zur Umfangsrichtung geneigt, dass sich das einlaufende Ende 5a₁ gegenüber dem auslaufenden Ende 5a₂ - bezogen auf die Mittellinie m_{RA} - näher zur Reifenäquatorialebene (vergl. Fig. 1) befindet.

Der mittlere Profilblock 7 ist zum Rillenabschnitt 5a durch eine bis zum Rillengrund 5a' reichende Blockflanke 12 (vergl. Fig. 3) begrenzt, welche von einer Blockkante 13 ausgeht und eine unstrukturierte Fläche ist. Die Blockflanke 12 ist dementsprechend frei von Unebenheiten, wie beispielsweise Vorsprüngen oder Rillen. Wie Fig. 3 zeigt, erscheint die Blockflanke 12, im Querschnitt senkrecht zur Mittelinie m_{RA} betrachtet, als gerade Linie, welche mit der radialen Richtung einen insbesondere konstanten Winkel ε von 2° bis 10°, insbesondere von 4° bis 8°, einschließt.

Der schulterseitige Profilblock 9 weist an der Laufstreifenperipherie Blockkanten 9a, 9b, 9c auf. Die Blockkanten 9a, 9b sind an den angrenzenden schulterseitigen Querrillen 8 ausgebildet, wobei beim Abrollen des Reifens bei Vorwärtsfahrt (Pfeil R) die Blockkante 9a vor der Blockkante 9b in den Untergrund eintritt. Die Blockkante 9c ist entlang des Rillenabschnittes 5a ausgebildet und verläuft in Draufsicht betrachtet gerade sowie zur Umfangrichtung unter einem Winkel γ von 2° bis 7°, insbesondere von höchstens 5°, wobei der Winkel γ mit dem Winkel β des Rillenabschnittes 5a übereinstimmt oder von diesem um insbesondere 2° abweicht.

Der schulterseitige Profilblock 9 ist ferner von einer Anzahl über die Umfangserstreckung des Profilblockes 9 zumindest im Wesentlichen gleichmäßig verteilten Einschnitten 10 durchquert, welche in Draufsicht betrachtet insgesamt leicht bogenförmig sowie parallel zu den Rillenmittellinien m_{QR} der Querrillen 8 verlaufen, über den seitlichen Rand der Bodenaufstandsfläche (Linie I) hinausreichen, in den Rillenabschnitt 5a einmünden sowie eine Breite von 0,4 mm bis 1,2 mm, insbesondere von höchstens 0,8 mm, sowie in radialer Richtung an ihrer tiefsten Stelle eine Tiefe von 75% bis 100%, insbesondere von höchstens 90%, der Profiltiefe T_{P} (Fig. 3) aufweisen. Die Einschnitte 10 gliedern den schulterseitigen Profilblock 9 in Blocksegmente 9d, unterbrechen die entlang des Rillenabschnittes 5a ausgebildete Blockkante 9c und verleihen dieser Blockkantenabschnitte 9c', welche jeweils zu einem der Blocksegmente 9d gehören. Ferner weisen die Einschnitte 10 jeweils einen Einschnittgrund 10c (Fig. 5) sowie beim gezeigten Ausführungsbeispiel einen in Draufsicht sägezahnförmig verlaufenden Einschnitthauptabschnitt 10a und einen in den Rillenabschnitt 5a einmündenden, in Draufsicht gerade oder kaum merkbar gebogen verlaufenden Einschnittrandabschnitt 10b auf, welcher gemäß Fig. 5 an seiner am Rillenabschnitt 5a liegenden Einmündung eine gegenüber der Blockkante 9c bzw. den Blockkantenabschnitten 9c' in radialer Richtung ermittelte Tiefe t_{b} von 20% bis 40%, insbesondere von 25% bis 35%, der Profiltiefe T_{P} (Fig. 3) aufweist. Die Anzahl der Einschnitte 10 ist in insbesondere bekannter Weise auf die Umfangslänge des schulterseitigen Profilblockes 9 abgestimmt, wobei die schulterseitigen Profilblöcke 9 insbesondere mit zwei, drei und vier Einschnitten 10 vorgesehen sind.

Wie Fig. 2 ferner zeigt, ist der schulterseitige Profilblock 9 zum Rillenabschnitt 5a durch eine von der Blockkante 9c ausgehende, bis zum Rillengrund 5a' (Fig. 3) reichende Blockflanke 11 begrenzt, welche eine über ihre Umfangserstreckung verlaufende, auf die Blocksegmente 9d abgestimmte, gleichmäßig gestufte Struktur bildet (vergl. Fig. 4, in welcher die Einschnitte 10 nicht gezeigt sind). Die gleichmäßig gestufte Struktur der Blockflanke 11 setzt sich - betrachtet über die Umfangserstreckung der Blockflanke 11 - aus den Blocksegmenten 9d zugeordneten Flankenflächen 11a und aus zur Rillenmittellinie m_{RA} quer- bzw. schräggestellten Übergangsflächen 11b zusammen, wobei jeweils eine Flankenfläche 11a abwechselnd auf eine Übergangsfläche 11b folgt. Wie insbesondere Fig. 3 bis Fig. 5 in Kombination miteinander zeigen, gehen die Flankenflächen 11a jeweils von einem Blockkantenabschnitt 9c' (Fig. 4, Fig. 5) aus und verlaufen bis zum Rillengrund 5a' (Fig. 3). Die Übergangsflächen 11b erstrecken sich zwischen den Flankenflächen 11a (Fig. 4, Fig. 5) und verlaufen zwischen dem Rillengrund 5a' (Fig. 2, Fig. 3) und dem Einschnittgrund 10c (Fig. 5), enden daher an den Einschnittrandabschnitten 10b in der erwähnten Tiefe t_{b} (Fig. 5).

Das gestufte Profil der Blockflanke 11 ist derart ausgeführt, dass, bei Sicht durch den Rillenabschnitt 5a mit Sichtrichtung entsprechend dem Winkel β der Mittellinie m_{RA} sowie vom einlaufenden Ende 5a₁ zum auslaufenden Ende 5a₂ (in Fig. 2 angedeutet durch den Pfeil P), die Flankenflächen 11a die Übergangsflächen 11b verschatten. In dieser Hinsicht sind die Übergangsflächen 11b von den Flankenflächen 11a "verdeckt".

Gemäß Fig. 3 setzt sich jede Flankenfläche 11a, im Querschnitt senkrecht zum Blockkantenabschnitt 9c' betrachtet (vergl. Lage der Schnittlinie III-III in Fig. 2), aus einem radial äußeren Flächenabschnitt 11a' und einem radial inneren Flächenabschnitt 11a" zusammen. Der radial äußere Flächenabschnitt 11a' verläuft, im Querschnitt senkrecht zum Blockkantenabschnitt 9c' betrachtet, gerade sowie zur radialen Richtung unter einem Winkel δ von 0° bis 7°, insbesondere von 1° bis 5°, wobei der Winkel δ über die Erstreckung des Blockkantenabschnittes 9c' in Richtung zum auslaufenden Ende 5a₂ (Fig. 2) des Rillenabschnittes 5a um insbesondere bis zu 2° zunimmt, wodurch die Übergangsflächen 11b (Fig. 2) "entstehen". Die Zunahme des Winkels δ erfolgt insbesondere kontinuierlich, also gleichmäßig. Der radial äußere Flächenabschnitt 11a' ist daher eine sich über die Erstreckung des Blockkantenabschnittes 9c' verdrehende Fläche. Der radial innere Flächenabschnitt 11a" verläuft, im Querschnitt senkrecht zum Blockkantenabschnitt 9c' betrachtet, kreisförmig gebogen und geht knickfrei in den radial äußeren Flächenabschnitt 11a' und den Rillengrund 5a' über. Der radial äußere Flächenabschnitt 11a' und der radial inneren Flächenabschnitt 11a" schließen in einer in radialer Richtung ermittelten Tiefe t₁ von 50% bis 95%, insbesondere von 70% bis 80%, der Profiltiefe T_{P} aneinander an.

Wie Fig. 4 und Fig. 5 zeigen, setzt sich jede Übergangsfläche 11b in radialer Richtung aus einem radial äußeren Flächenabschnitt 11b' und einem radial inneren Flächenabschnitt 11b" zusammen. Der radial innere Flächenabschnitt 11b" der Übergangsfläche 11b erstreckt sich zwischen den radial inneren Flächenabschnitten 11a" der angrenzenden Flankenfläche 11a, weist - entsprechend der Gestalt der radial inneren Flächenabschnitte 11a" - einen in radialer Richtung kreisbogenförmigen Verlauf (siehe insbesondere Fig. 4) sowie ferner eine konstante Breite b_{F} (Fig. 5) von 0,3 mm bis 1,0 mm, insbesondere von 0,5 mm bis 0,8 mm, auf. Gemäß Fig. 5 erstreckt sich der radial äußere Flächenabschnitt 11b' der Übergangsfläche 11b zwischen den radial äußeren Flächenabschnitten 11a' der jeweils angrenzenden Flankenflächen 11a und wird ausgehend vom radial inneren Flächenabschnitt 11b", an welchem er ebenfalls die Breite b_{F} aufweist, in Richtung zum Einschnittrandabschnitt 10b insbesondere kontinuierlich schmäler und endet in der Tiefe t_{b}. Ferner weist der radial äußere Flächenabschnitt 11b' in der Tiefe t_{b} eine an den Einschnittgrund 10c anschließende radial äußere Begrenzungskante 14 mit einer Länge von insbesondere höchstens 0,3 mm auf. Der radial äußere Flächenabschnitt 11b' ist daher eine in radialer Richtung langgezogene und im Wesentlichen dreieckige Fläche. Der radial äußere Flächenabschnitt 11b' und der radial inneren Flächenabschnitt 11b" schließen - analog zu den Flächenabschnitten 11a', 11a" - in der bereits erwähnten Tiefe t₁ aneinander an.

Die Erfindung ist auf das beschriebene Ausführungsbeispiel nicht beschränkt.

Insbesondere weist der Laufstreifen zumindest zwei Profilblockreihen auf, wobei die Profilblöcke einer Profilblockreihe mit der gleichmäßig gestuften Struktur versehen sind. Die Neigung der Rillenabschnitte der Umfangsrille, welche die zumindest zwei Profilblockreihen voneinander trennt, kann von der beschriebenen Ausführung abweichen. Der radial äußere Flächenabschnitt der Übergangsflächen kann am Einschnittgrund auslaufen, sodass dieser keine radial äußere Begrenzungskante aufweist.

### Bezugsziffernliste

- 1: schulterseitige Profilblockreihe
- 2: mittlere Profilblockreihe
- 3: zentrale Profilrippe
- 4: mittlere Umfangsrille
- 5: schulterseitige Umfangsrille
- 5a: Rillenabschnitt
- 5a': Rillengrund
- 5a₁: einlaufendes Ende
- 5a₂: auslaufendes Ende
- 6: mittlere Querrille
- 7: mittlerer Profilblock
- 8: schulterseitige Querrille
- 9: schulterseitiger Profilblock
- 9a, 9b, 9c: Blockkante
- 9c': Blockkantenabschnitt
- 9d: Blocksegment
- 10: Einschnitt
- 10a: Einschnitthauptabschnitt
- 10b: Einschnittrandabschnitt
- 10c: Einschnittgrund
- 11: Blockflanke
- 11a: Flankenfläche
- 11a': radial äußerer Flächenabschnitt
- 11a": radial innerer Flächenabschnitt
- 11b: Übergangsfläche
- 11b': radial äußerer Flächenabschnitt
- 11b": radial innerer Flächenabschnitt
- 12: Blockflanke
- 13: Blockkante
- 14: Begrenzungskante
- A-A: Linie (Reifenäquatorialebene)
- b_{F}, b_{RA}: Breite
- I: Linie (seitlicher Rand der Bodenaufstandsfläche)
- m_{QR}: Rillenmittellinie
- m_{RA}: Mittellinie
- P: Pfeil (Sichtrichtung)
- R: Pfeil (Abrollrichtung)
- S₄, S₅: Pfeil (Sichtrichtung)
- t_{b}, t₁: Tiefe
- T_{P}: Profiltiefe
- α, β, γ, δ, ε: Winkel

## Patentansprüche

1. Fahrzeugluftreifen
- mit einem laufrichtungsgebunden gestalteten Laufstreifen mit zumindest zwei Profilblockreihen (1, 2), welche durch eine Umfangsrille (5) getrennt und durch in die Umfangsrille (5) einmündende in Draufsicht jeweils parallel zueinander verlaufende Querrillen (6, 8) in Profilblöcke (7, 9) gegliedert sind,
- wobei die Umfangsrille (5) parallel zueinander verlaufende, jeweils einen Profilblock (7) aus der einen Profilblockreihe (2) von einem Profilblock (9) aus der anderen Profilblockreihe (1) trennende Rillenabschnitte (5a) mit jeweils einem Rillengrund (5a') sowie mit jeweils einem beim Abrollen des Reifens bei Vorwärtsfahrt (Pfeil R) zuerst in Untergrund eintretenden, einlaufenden Ende (5a₁) und einem auslaufenden Ende (5a₂) aufweist,
- wobei die Profilblöcke (7, 9) an der Laufstreifenperipherie entlang der Rillenabschnitte (5a) jeweils eine in Draufsicht gerade verlaufende Blockkante (9c, 13) und eine von dieser ausgehende bis zum Rillengrund (5a') des jeweiligen Rillenabschnittes (5a) verlaufende Blockflanke (11, 12) aufweisen,
- wobei zumindest die Profilblöcke (9) der einen Profilblockreihe (1) mit in die Rillenabschnitte (5a) einmündenden, Einschnittgründe (10c) aufweisenden Einschnitten (10), welche die Blockkanten (9c) jeweils in Blockkantenabschnitte (9c') teilen, versehen sind,
**dadurch gekennzeichnet,**
- **dass** die Blockflanken (11) der Profilblöcke (9), welche mit den in die Rillenabschnitte (5a) einmündenden Einschnitten (10) versehen sind, entlang des Rillenabschnittes (5a) eine gleichmäßig gestufte Struktur bilden, welche sich aus Flankenflächen (11a) und Übergangsflächen (11b) zusammensetzt,
- wobei die Flankenflächen (11a) von den Blockkantenabschnitten (9c') ausgehen und bis zum Rillengrund (5a') verlaufen und
- die Übergangsflächen (11b) zwischen den Flankenflächen (11a) sowie vom Rillengrund (5a') zum Einschnittgrund (10c) verlaufen und schmäler als die Flankenflächen (11a) ausgeführt sind und
- wobei bei Sicht durch einen Rillenabschnitt (5a) in Richtung (Pfeil P) vom einlaufenden Ende (5a₁) zum auslaufenden Ende (5a₂), die Flankenflächen (11a) die Übergangsflächen (11b) verdecken.

2. Fahrzeugluftreifen nach Anspruch 1, **dadurch gekennzeichnet, dass** die Rillenabschnitte (5a) derart zur Umfangsrichtung geneigt sind, dass sich das einlaufende Ende (5a₁) jedes Rillenabschnittes (5a) näher zur Reifenäquatorialebene (Linie A-A) befindet als das auslaufende Ende (5a₂).

3. Fahrzeugluftreifen nach Anspruch 1 oder 2, **dadurch gekennzeichnet, dass** die Übergangsflächen (11b) der Blockflanken (11), welche die gleichmäßig gestufte Struktur bilden, an ihrer breitesten Stelle eine Breite (b_{F}) von 0,3 mm bis 1,0 mm, insbesondere von 0,5 mm bis 0,8 mm, aufweisen.

4. Fahrzeugluftreifen nach einem der Ansprüche 1 bis 3, **dadurch gekennzeichnet, dass** die Übergangsflächen (11b) der Blockflanken (11), welche die gleichmäßig gestufte Struktur bilden, eine an den Einschnittgrund (10c) anschließende radial äußere Begrenzungskante (14) mit einer Länge von insbesondere höchstens 0,3 mm aufweisen.

5. Fahrzeugluftreifen nach einem der Ansprüche 1 bis 4, **dadurch gekennzeichnet, dass** die Übergangsflächen (11b) der Blockflanken (11), welche die gleichmäßig gestufte Struktur bilden, betrachtet ausgehend vom Rillengrund (5a') des jeweiligen Rillenabschnitts (5a), in Richtung zum jeweiligen Einschnittgrund (10c) zumindest über einen radial äußeren Flächenabschnitt (11b') insbesondere kontinuierlich schmäler werden.

6. Fahrzeugluftreifen nach Anspruch 5, **dadurch gekennzeichnet, dass** sich die Übergangsflächen (11b) der Blockflanken (11), welche die gleichmäßig gestufte Struktur bilden, in radialer Richtung jeweils aus dem radial äußeren Flächenabschnitt (11b') und einem radial inneren, in radialer Richtung kreisbogenförmig verlaufenden Flächenabschnitt (11b") zusammensetzen, wobei der radial äußere Flächenabschnitt (11b') und der radial innere radial innere Flächenabschnitt (11b") in radialer Richtung in einer Tiefe (t₁) von 50% bis 95%, insbesondere von 70% bis 80%, der Profiltiefe (T_{P}) aneinander anschließen.

7. Fahrzeugluftreifen nach einem der Ansprüche 1 bis 6, **dadurch gekennzeichnet, dass** die Übergangsflächen (11b) der Blockflanken (11), welche die gleichmäßig gestufte Struktur bilden, in Draufsicht betrachtet, zur Erstreckungsrichtung der Rillenabschnitte (5a) quer- oder schräggestellt sind.

8. Fahrzeugluftreifen nach einem der Ansprüche 1 bis 7, **dadurch gekennzeichnet, dass** sich die Flankenflächen (11a) der Blockflanken (11), welche die gleichmäßig gestufte Struktur bilden, in radialer Richtung aus einem radial äußeren Flächenabschnitt (11a') und einem radial inneren Flächenabschnitt (11a") zusammensetzen, wobei der radial äußere Flächenabschnitt (11a'), im Querschnitt senkrecht zum Blockkantenabschnitt (9c') betrachtet, gerade sowie zur radialen Richtung unter einem Winkel (δ) von 0° bis 7°, insbesondere von 1° bis 5°, verläuft, wobei der Winkel (δ) über die Erstreckung des Blockkantenabschnittes (9c') in Richtung zum auslaufenden Ende (5a₂) des Rillenabschnittes (5a) kontinuierlich um insbesondere bis zu 2° zunimmt.

9. Fahrzeugluftreifen nach einem der Ansprüche 1 bis 8, **dadurch gekennzeichnet, dass** ausschließlich die Blockflanken (11) der Profilblöcke (9) der einen Profilblockreihe (1) die gleichmäßig gestufte Struktur bilden und die Blockflanken (12) der Profilblöcke (7) der anderen Profilblockreihe (2) unstrukturierte Flächen sind.

10. Fahrzeugluftreifen nach Anspruch 9, **dadurch gekennzeichnet, dass** sich die Profilblockreihe (1) mit den Profilblöcken (9), deren Blockflanken (11) die gleichmäßig gestufte Struktur bilden, gegenüber der anderen Profilblockreihe (2) weiter laufstreifenaußenseitig befindet.

11. Fahrzeugluftreifen nach Anspruch 9 oder 10, **dadurch gekennzeichnet, dass** die Profilblockreihe (1) mit jenen Profilblöcken (9), deren Blockflanken (11) die gleichmäßig gestufte Struktur bilden, eine schulterseitige Profilblockreihe (1) ist.

12. Fahrzeugluftreifen nach einem der Ansprüche 9 bis 11, **dadurch gekennzeichnet, dass** die Blockflanken (12), welche unstrukturierte Flächen sind, im Querschnitt senkrecht zur Mittelinie (m_{RA}) des Rillenabschnittes (5a) betrachtet, zur radialen Richtung unter einen insbesondere konstanten Winkel (ε) von 2° bis 10°, vorzugsweise von 4° bis 8°, verlaufen.

13. Fahrzeugluftreifen nach einem der Ansprüche 1 bis 12, **dadurch gekennzeichnet, dass** die Rillenabschnitte (5a) der Umfangsrille (5), in Draufsicht betrachtet und bezogen auf eine Mittelinie (m_{RA}) zur Umfangsrichtung, unter einem Winkel (β) von 2° bis 7°, insbesondere von höchstens 5°, verlaufen.

14. Fahrzeugluftreifen nach einem der Ansprüche 1 bis 13, **dadurch gekennzeichnet, dass** die Umfangsrille (5), im Querschnitt betrachtet, keinen oder einen reduzierten "lookthrough" aufweist, sodass, im in axialer Richtung ausgerichteten Querschnitt betrachtet, keine bzw. eine reduzierte Durchsicht durch die Umfangsrille (5) möglich ist.

15. Fahrzeugluftreifen nach einem der Ansprüche 1 bis 14, **dadurch gekennzeichnet, dass** die Einschnitte (10) jeweils einen Einschnittrandabschnitt (10b) aufweisen, welcher in den Rillenabschnitt (5a) einmündet und in radialer Richtung eine Tiefe (t_{b}) von 20% bis 40%, insbesondere von 25% bis 35%, der Profiltiefe (T_{P}) aufweist.

## Claims

1. Pneumatic tyre for a vehicle
- having a directional tread with at least two profile block rows (1, 2), which are separated by a circumferential channel (5) and are subdivided into profile blocks (7, 9) by transverse channels (6, 8), which open into the circumferential channel (5) and extend parallel to one another in plan view,
- wherein the circumferential channel (5) has channel portions (5a) which extend parallel to one another, each separate a profile block (7) of the one profile block row (2) from a profile block (9) of the other profile block row (1) and each have a channel base (5a') and a leading end (5a₁), which meets the underlying surface first when the tyre rolls in forward travel (arrow R), and a trailing end (5a₂),
- wherein the profile blocks (7, 9) each have, at the tread periphery, along the channel portions (5a), a block edge (9c, 13) extending in a straight line in plan view and a block flank (11, 12) starting from the block edge and extending as far as the channel base (5a') of the respective channel portion (5a),
- wherein at least the profile blocks (9) of the one profile block row (1) are provided with sipes (10), which open into the channel portions (5a), have sipe bases (10c) and subdivide each of the block edges (9c) into block edge portions (9c'),
**characterized**
- **in that** the block flanks (11) of the profile blocks (9) which are provided with the sipes (10) opening into the channel portions (5a) form a uniformly stepped structure along the channel portion (5a), which structure is composed of flank surfaces (11a) and transition surfaces (11b),
- wherein the flank surfaces (11a) start from the block edge portions (9c') and extend as far as the channel base (5a'), and
- the transition surfaces (11b) extend between the flank surfaces (11a) and from the channel base (5a') to the sipe base (10c) and are narrower than the flank surfaces (11a), and
- wherein, when viewed through a channel portion (5a) in the direction (arrow P) from the leading end (5a₁) to the trailing end (5a₂), the flank surfaces (11a) conceal the transition surfaces (11b).

2. Pneumatic tyre for a vehicle according to Claim 1, **characterized in that** the channel portions (5a) are inclined with respect to the circumferential direction in such a way that the leading end (5a₁) of each channel portion (5a) is closer to the tyre equatorial plane (line A-A) than the trailing end (5a₂).

3. Pneumatic tyre for a vehicle according to Claim 1 or 2, **characterized in that** the transition surfaces (11b) of the block flanks (11) which form the uniformly stepped structure have a width (b_{F}) at their widest point of 0.3 mm to 1.0 mm, in particular of 0.5 mm to 0.8 mm.

4. Pneumatic tyre for a vehicle according to any one of Claims 1 to 3, **characterized in that** the transition surfaces (11b) of the block flanks (11) which form the uniformly stepped structure have a radially outer boundary edge (14), which adjoins the sipe base (10c) and has a length of, in particular, at most 0.3 mm.

5. Pneumatic tyre for a vehicle according to any one of Claims 1 to 4, **characterized in that** the transition surfaces (11b) of the block flanks (11) which form the uniformly stepped structure, when viewed starting from the channel base (5a') of the respective channel portion (5a), become narrower, in particular continuously narrower, in the direction of the respective sipe base (10c), at least over a radially outer surface portion (11b').

6. Pneumatic tyre for a vehicle according to Claim 5, **characterized in that** the transition surfaces (11b) of the block flanks (11) which form the uniformly stepped structure are each composed in the radial direction of the radially outer surface portion (11b') and a radially inner surface portion (11b") extending in the form of a circular arc in the radial direction, wherein the radially outer surface portion (11b') and the radially inner radially inner surface portion (11b") adjoin one another in the radial direction at a depth (t₁) of 50% to 95%, in particular of 70% to 80%, of the profile depth (T_{P}).

7. Pneumatic tyre for a vehicle according to any one of Claims 1 to 6, **characterized in that** the transition surfaces (11b) of the block flanks (11) which form the uniformly stepped structure are set transversely or obliquely with respect to the direction of extent of the channel portions (5a) when viewed in plan view.

8. Pneumatic tyre for a vehicle according to any one of Claims 1 to 7, **characterized in that** the flank surfaces (11a) of the block flanks (11) which form the uniformly stepped structure are composed in the radial direction of a radially outer surface portion (11a') and a radially inner surface portion (11a"), wherein, when viewed in cross section perpendicularly to the block edge portion (9c'), the radially outer surface portion (11a') extends in a straight line and at an angle (δ) of 0° to 7°, in particular of 1° to 5°, to the radial direction, wherein the angle (δ) increases continuously in the direction of the trailing end (5a₂) of the channel portion (5a), in particular by up to 2°, over the extent of the block edge portion (9c').

9. Pneumatic tyre for a vehicle according to any one of Claims 1 to 8, **characterized in that** only the block flanks (11) of the profile blocks (9) of the one profile block row (1) form the uniformly stepped structure, and the block flanks (12) of the profile blocks (7) of the other profile block row (2) are unstructured surfaces.

10. Pneumatic tyre for a vehicle according to Claim 9, **characterized in that** the profile block row (1) having the profile blocks (9) whose block flanks (11) form the uniformly stepped structure is located further to the outside of the tread than the other profile block row (2).

11. Pneumatic tyre for a vehicle according to Claim 9 or 10, **characterized in that** the profile block row (1) having those profile blocks (9) whose block flanks (11) form the uniformly stepped structure is a shoulder-side profile block row (1).

12. Pneumatic tyre for a vehicle according to any one of Claims 9 to 11, **characterized in that**, when viewed in cross section perpendicularly to the centre line (m_{RA}) of the channel portion (5a), the block flanks (12) which are unstructured surfaces extend at an angle (ε), in particular a constant angle, of 2° to 10°, preferably of 4° to 8°, to the radial direction.

13. Pneumatic tyre for a vehicle according to any one of Claims 1 to 12, **characterized in that**, when viewed in plan view and in relation to a centre line (m_{RA}), the channel portions (5a) of the circumferential channel (5) extend at an angle (β) of 2° to 7°, in particular at most 5°, to the circumferential direction.

14. Pneumatic tyre for a vehicle according to any one of Claims 1 to 13, **characterized in that** the circumferential groove (5), when viewed in cross-section, has no or a reduced "look-through", so that, when viewed in the axially aligned cross-section, no or a reduced see-through view through the circumferential groove (5) is possible.

15. Pneumatic tyre for a vehicle according to any one of Claims 1 to 14, **characterized in that** the sipes (10) each have an edge-side sipe portion (10b) which opens into the channel portion (5a) and has a depth (t_{b}) in the radial direction of 20% to 40%, in particular of 25% to 35%, of the profile depth (T_{P}).

## Revendications

1. Pneumatique de véhicule,
- avec une bande de roulement conçue sous forme directionnelle avec au moins deux rangées de blocs de profil (1, 2), qui sont séparées par une rainure circonférentielle (5) et sont divisées en blocs de profil (7, 9) par des rainures transversales (6, 8) débouchant dans la rainure circonférentielle (5), s'étendant parallèlement les unes aux autres en vue de dessus,
- la rainure circonférentielle (5) présentant des sections de rainure (5a) s'étendant parallèlement les unes aux autres, séparant respectivement un bloc de profil (7) d'une rangée de blocs de profil (2) d'un bloc de profil (9) de l'autre rangée de blocs de profil (1), avec respectivement un fond de rainure (5a') ainsi qu'avec respectivement une extrémité entrante (5a₁) entrant d'abord dans le sol lors du roulement du pneu en marche avant (flèche R) et une extrémité sortante (5a₂),
- les blocs de profil (7, 9) présentant au niveau de la périphérie de la bande de roulement le long des sections de rainure (5a) respectivement une arête de bloc (9c, 13) s'étendant en ligne droite en vue de dessus et un flanc de bloc (11, 12) s'étendant en partant de celle-ci jusqu'au fond de rainure (5a') de la section de rainure (5a) respective,
- au moins les blocs de profil (9) de l'une des rangées de blocs de profil (1) étant pourvus d'entailles (10) débouchant dans les sections de rainures (5a), présentant des fonds d'entailles (10c), qui divisent les arêtes de blocs (9c) respectivement en sections d'arêtes de blocs (9c'),
**caractérisé en ce que**
- les flancs de blocs (11) des blocs de profil (9), qui sont pourvus des entailles (10) débouchant dans les sections de rainure (5a), forment le long de la section de rainure (5a) une structure régulièrement étagée, qui se compose de surfaces de flanc (11a) et de surfaces de transition (11b),
- les surfaces de flanc (11a) partant des sections d'arêtes de blocs (9c') et s'étendant jusqu'au fond de rainure (5a'), et
- les surfaces de transition (11b) s'étendant entre les surfaces de flanc (11a) ainsi que du fond de rainure (5a') au fond d'entaille (10c) et étant conçues plus étroites que les surfaces de flanc (11a) et
- lorsqu'on regarde à travers une section de rainure (5a) dans la direction (flèche P) de l'extrémité entrante (5a₁) à l'extrémité sortante (5a₂), les surfaces de flanc (11a) masquant les surfaces de transition (11b).

2. Pneumatique de véhicule selon la revendication 1, **caractérisé en ce que** les sections de rainure (5a) sont inclinées par rapport à la direction circonférentielle de telle sorte que l'extrémité entrante (5a₁) de chaque section de rainure (5a) est plus proche du plan équatorial de pneu (ligne A-A) que l'extrémité sortante (5a₂).

3. Pneumatique de véhicule selon la revendication 1 ou 2, **caractérisé en ce que** les surfaces de transition (11b) des flancs de blocs (11), qui forment la structure régulièrement étagée, présentent une largeur (b_{F}) de 0,3 mm à 1,0 mm, notamment de 0,5 mm à 0,8 mm, à leur point le plus large.

4. Pneumatique de véhicule selon l'une quelconque des revendications 1 à 3, **caractérisé en ce que** les surfaces de transition (11b) des flancs de blocs (11), qui forment la structure régulièrement étagée, présentent une arête de délimitation radialement extérieure (14) se raccordant au fond d'entaille (10c) avec une longueur notamment d'au plus 0,3 mm.

5. Pneumatique de véhicule selon l'une quelconque des revendications 1 à 4, **caractérisé en ce que** les surfaces de transition (11b) des flancs de blocs (11) qui forment la structure régulièrement étagée, considérées à partir du fond de rainure (5a') de la section de rainure respective (5a), se rétrécissent notamment de manière continue en direction du fond d'entaille respectif (10c) au moins sur une section de surface radialement extérieure (11b').

6. Pneumatique de véhicule selon la revendication 5, **caractérisé en ce que** les surfaces de transition (11b) des flancs de blocs (11), qui forment la structure régulièrement étagée, se composent respectivement, dans la direction radiale, de la section de surface radialement extérieure (11b') et d'une section de surface radialement intérieure (11b") s'étendant en forme d'arc de cercle dans la direction radiale, la section de surface radialement extérieure (11b') et la section de surface radialement intérieure radialement intérieure (11b") se raccordant l'une à l'autre dans la direction radiale à une profondeur (t₁) de 50 % à 95 %, notamment de 70 % à 80 %, de la profondeur de profil (T_{P}).

7. Pneumatique de véhicule selon l'une quelconque des revendications 1 à 6, **caractérisé en ce que** les surfaces de transition (11b) des flancs de blocs (11) qui forment la structure régulièrement étagée, considérées en vue de dessus, sont transversales ou obliques par rapport à la direction d'extension des sections de rainure (5a).

8. Pneumatique de véhicule selon l'une quelconque des revendications 1 à 7, **caractérisé en ce que** les surfaces de flanc (11a) des flancs de blocs (11), qui forment la structure régulièrement étagée, se composent, dans la direction radiale, d'une section de surface radialement extérieure (11a') et d'une section de surface radialement intérieure (11a"), la section de surface radialement extérieure (11a'), considérée en coupe transversale perpendiculairement à la section d'arête de bloc (9c'), s'étendant en ligne droite ainsi que par rapport à la direction radiale selon un angle (δ) de 0° à 7°, notamment de 1° à 5°, l'angle (δ) augmentant de manière continue, notamment de jusqu'à 2°, sur l'étendue de la section d'arête de bloc (9c') en direction de l'extrémité sortante (5a₂) de la section de rainure (5a).

9. Pneumatique de véhicule selon l'une quelconque des revendications 1 à 8, **caractérisé en ce que** seuls les flancs de blocs (11) des blocs de profil (9) d'une rangée de blocs de profil (1) forment la structure régulièrement étagée et les flancs de blocs (12) des blocs de profil (7) de l'autre rangée de blocs de profil (2) sont des surfaces non structurées.

10. Pneumatique de véhicule selon la revendication 9, **caractérisé en ce que** la rangée de blocs de profil (1) avec les blocs de profil (9) dont les flancs de blocs (11) forment la structure régulièrement étagée se trouve plus à l'extérieur de la bande de roulement par rapport à l'autre rangée de blocs de profil (2).

11. Pneumatique de véhicule selon la revendication 9 ou 10, **caractérisé en ce que** la rangée de blocs de profil (1) avec les blocs de profil (9) dont les flancs de blocs (11) forment la structure régulièrement étagée est une rangée de blocs de profil (1) côté épaulement.

12. Pneumatique de véhicule selon l'une quelconque des revendications 9 à 11, **caractérisé en ce que** les flancs de blocs (12), qui sont des surfaces non structurées, s'étendent en section transversale perpendiculairement à la ligne médiane (m_{RA}) de la section de rainure (5a), par rapport à la direction radiale, selon un angle (ε) notamment constant de 2° à 10°, de préférence de 4° à 8°.

13. Pneumatique de véhicule selon l'une quelconque des revendications 1 à 12, **caractérisé en ce que** les sections de rainure (5a) de la rainure circonférentielle (5), considérées en vue de dessus et par rapport à une ligne médiane (m_{RA}) par rapport à la direction circonférentielle, s'étendent selon un angle (β) de 2° à 7°, notamment d'au plus 5°.

14. Pneumatique de véhicule selon l'une quelconque des revendications 1 à 13, **caractérisé en ce que** la rainure circonférentielle (5), considérée en coupe transversale, n'a pas de « lookthrough » ou a un « lookthrough » réduit, de telle sorte que, considérée en coupe transversale orientée dans la direction axiale, aucune visibilité ou une visibilité réduite est possible à travers la rainure circonférentielle (5).

15. Pneumatique de véhicule selon l'une quelconque des revendications 1 à 14, **caractérisé en ce que** les entailles (10) présentent chacune une section d'arête d'entaille (10b) qui débouche dans la section de rainure (5a) et qui présente, dans la direction radiale, une profondeur (t_{b}) de 20 % à 40 %, notamment de 25 % à 35 %, de la profondeur de profil (T_{P}).
